# EUROPEAN PATENT SPECIFICATION

(11) **EP 2 851 060 B1**
(45) Date of publication and mention of the grant of the patent: **14.03.2018**
(21) Application number: 14179657.3
(22) Date of filing: 04.08.2014
(51) Int. Cl.: A61J 3/07, G01G 13/14, G01G 23/01, B65B 57/08, B65B 1/04, B65B 1/46

(54) **Filling machine and method for weighing articles**
Abfüllanlage und Verfahren zum Wiegen von Artikeln
Machine de remplissage et methode pour peser

(30) Priority: 05.08.2013 IT BO20130440
(43) Date of publication of application: 25.03.2015
(73) Proprietor: I.M.A. Industria Macchine Automatiche S.p.A., 40064 Ozzano dell'Emilia (BO) (IT)
(72) Inventor: Maldina, Lorenzo, 40133 Bologna (IT)
(74) Representative: Cicconetti, Andrea

(56) References cited:
- EP-A1- 1 647 484
- DE-A1-102005 006 733
- US-A1- 2012 207 272

## Description

The present invention relates to systems and methods for weighing articles, such as capsules, push-fit capsules, or the like, or containers, for example vials, bottles or the like, in an automatic packaging machine. In particular, the invention relates to a filling machine provided with an apparatus for weighing the processed articles and a method for weighing the said articles.

In the filling processes of articles, such as capsules or containers, with liquid pharmaceutical products, in the form of powder, granules or tablets, the use is known of weighing apparatuses or devices that are arranged downstream of the filling machine, or downstream of the filling station, in order to measure the weight of the dosed product. Weight control is necessary for discarding from the production the non-compliant articles (e.g., because they contain a product amount outside of the tolerance range of the permissible dosing) and/or for correcting any excesses or defects in the product dosing.

In the pharmaceutical field, it is very important to verify that the weight of the product dosed into the single articles (capsules or containers) is exactly as required, with very narrow tolerance ranges.

Generally, only one weighing operation on the article is performed at the end of the dosing, since the weight of the empty capsules, or containers, is known and falling within a preset tolerance range, indicated and guaranteed by the suppliers/producers. In this manner, by subtracting from the weight of the filled article (gross weight) the known weight of the empty article (tare) it is possible to calculate the weight of the dosed product (net weight) with a certain accuracy degree.

In the case that the tolerance ranges of the weights of the empty capsules or containers are too large, and in any case such as to affect the measurement of the dosed product weight, it is necessary to weigh each capsule or container in advance and calculate by a subtraction the weight of the dosed product. For this purpose, weighing systems have been implemented, which comprise a first weighing unit, upstream of the filling machine or the filling unit, which measures the weight of the empty elements (tare), and a second weighing unit, downstream of the filling machine, which measures the weight of the filled elements (gross weight). The difference in the gross and tare weight, which are measured and stored for each article by a control unit of the machine, allows said control unit calculating the net weight of the dosed product.

The weighing apparatuses carrying out this type of direct measurement comprise electronic scales, typically provided with a plurality of load cells, each of which is provided with a respective support (pan) onto which the articles have to be positioned for an opportune time.

In order to ensure accuracy and repeatability of the measurements, the scales are placed directly onto the floor supporting the filling machine and separated and detached from the latter in order not to be subjected to vibrations, shocks, and collisions that may affect and disturb the weight measurement.

In the filling processes of capsules or push-fit capsules, the need is frequent of dosing very small amounts of product, e.g., a few milligrams (so-called "micro-doses") within very restricted tolerance ranges on the product dosing, for example, ± 10%. In these cases, the effect of perturbations and disturbances of various kinds on the load cells can sensibly affect the measurement.

Therefore, it is provided to combine the load cells that carry out the weight control of the capsule, with a reference load cell that is not provided with a support and is positioned inside the scale in order to detect vibrations and/or accelerations generated by the filling machine. In this manner, the calculation unit of the scale is capable of "filtering", i.e. correcting the measurements executed on the capsules by the other load cells taking into account the disturbance induced on the latter ones by the vibrations. The reference load cell is generally enclosed within the containment casing of the scale and isolated from the outer environment in order to prevent the entry of foreign elements inside the scale, such as residues of product and/or of containers, contaminants, dirt, which could compromise the operation of the load cells.

However, this solution has the drawback of not allowing detecting other types of disturbances that may affect the weighing operation.

Particularly, in the case of filling machines provided with a containment cabin, the so-called protection hood, besides the perturbations (vibrations, accelerations) generated by the mechanisms and the moving parts of the machine, there are disturbances which are caused by the air flows, streams, and turbulences. In fact, the containment cabins separate from the outer environment a working volume that can be kept in a filtered and controlled atmosphere to carry out the filling process, preventing or minimizing possible contaminations of the dosed product. For this purpose, there is provided to introduce filtered (aseptic) air into the containment cabin through directed air flows (laminar flows). However, the air flows and turbulences that are created inside the containment cabin cause localized changes in the air pressure that are capable of altering the measurement performed by the load cells.

In capsule filling machines, pneumatic means is provided for carrying out operations on the capsules, in particular the opening, filling, closing operations. Said pneumatic means generates air draughts and/or turbulences that are pulsated or intermittent, which significantly affect the weight measurement. The pulsated draughts and/or air turbulences generated by the pneumatic means produce major disturbances within at closed and confined environment, such as a containment cabin of the filling machine.

It is clear that such disturbances generated by air draughts cannot be detected by the reference load cell which is enclosed inside the containment casing of the scale, i.e. pneumatically isolated from the working volume.

DE 102005006733 discloses a container filling device having a plurality of operative stations for executing operations, comprising a feeding station, a dosing station, moving means, a weighing apparatus, transferring means and processing means for receiving data relating to the weight of the weighed article, and further including a transport channel for transportation of containers in a filling station having filling units. The transport channel is integrated in a weighing zone comprising a weighing device that is integrated in the transport channel such that the containers are transported on the channel passing through the channel and are weighed.

An object of the present invention is to improve the known filling machines that are provided with systems for weighing articles, such as capsules, push-fit capsules, or the like, or containers, such as vials, bottles, or the like, and the known methods for weighing articles in a filling machine.

Another object is to provide a filling machine and a method that allow measuring in an accurate and repeatable manner the articles, by detecting and evaluating the disturbances and perturbations generated by the filling machine itself, in particular provided with a containment cabin.

A further object is to obtain a machine and a method that allow detecting and evaluating, in measuring the weight of the articles, the disturbances and perturbations due both to vibrations, accelerations, stresses generated by the mechanisms and moving parts of the machine, and to air flows, draughts and/or turbulences generated by laminar air flows pneumatic means of operative stations of the machine.

In a first aspect of the invention, a filling machine is provided according to claim 1.

In a second aspect of the invention, a method for weighing elements is provided according to claim 10.

The invention will be better understood and implemented with reference to the appended drawings, which illustrate some illustrative, not-limiting embodiment thereof, in which:
- Figure 1 is a schematic plan view from above of a filling machine according to the invention;
- Figure 2 is a plan view of a weighing apparatus of the machine of Figure 1;
- Figure 3 is a partial section along the line III-III of Figure 2, which illustrates a reference weighing unit of the weighing apparatus;
- Figure 4 is a partial and interrupted section along the line IV-IV of Figure 2, which illustrates operative and reference weighing units of the weighing apparatus.

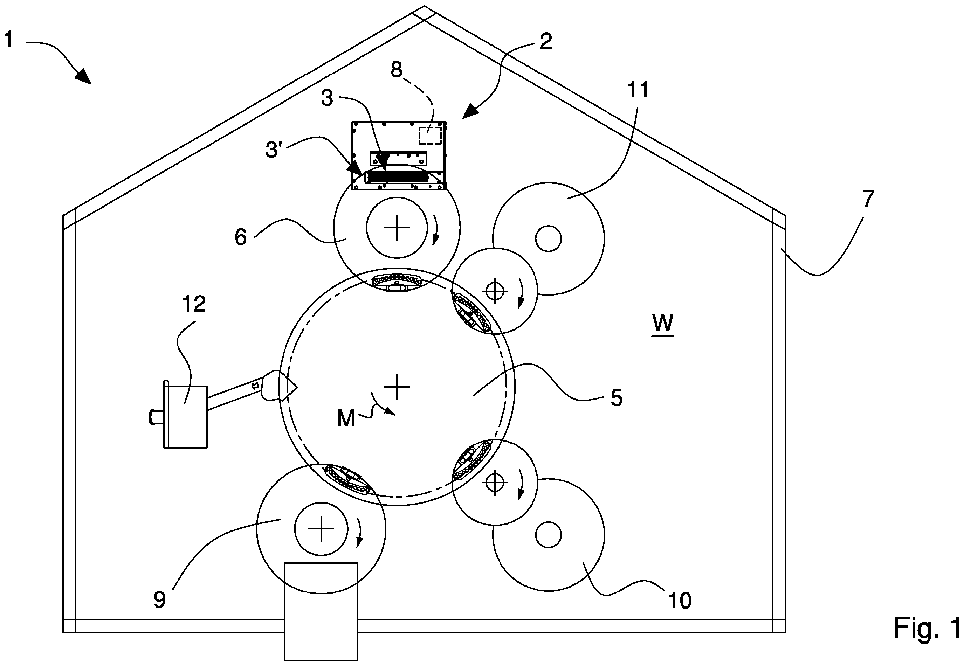

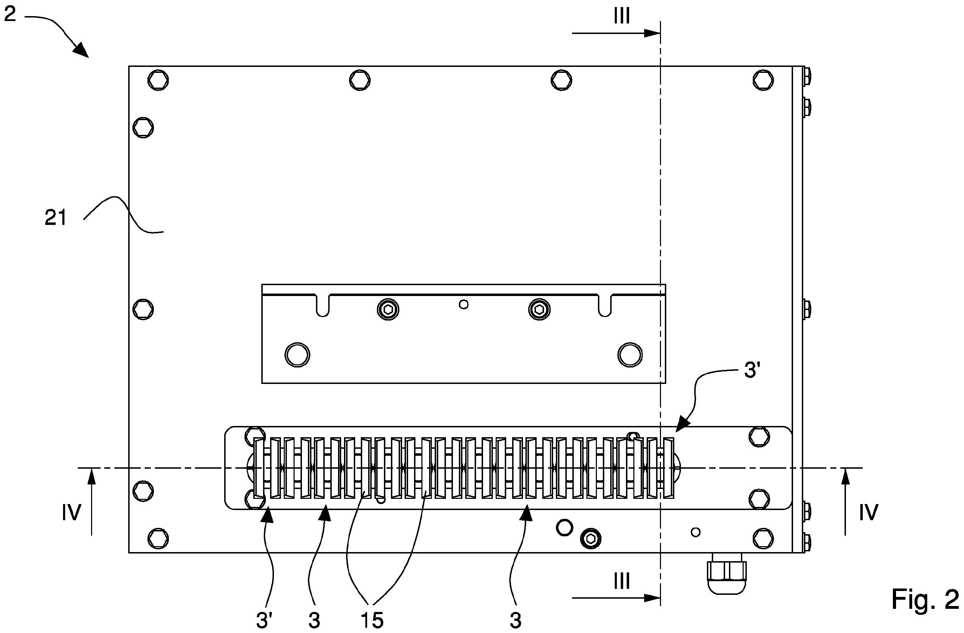

With reference to the Figures 1 to 4, a filling machine 1 according to the invention is schematically illustrated, which is arranged for filling articles 100, for example capsules, push-fit capsules, or similar elements of hard gelatin, with a pharmaceutical product that is in the form of a liquid, powder, granules or tablets.

The machine 1 comprises a weighing apparatus 2 provided with casing means 21, 22 arranged to at least partially contain weighing means 3, 3' suitable to detect the weight of the articles 100.

The machine 1 is provided with processing means 8 connected to the weighing means 3, 3' so as to receive from the latter ones data relating to the measurements performed. The processing means 8 is, for example, inserted in the weighing apparatus 2.

Transferring means 6 is provided for transferring the articles 100 to/from said weighing apparatus 2.

In the embodiment illustrated by way of example, the filling machine 1 comprises moving means 5 arranged to move the articles 100 in sequence through the different operative stations, which allow carrying out the filling process. More precisely, the moving means 5 moves the articles 100 from a feeding station 9, in which said articles 100 are picked up while they are empty, for example, from a magazine, to a first dosing station 10 and a subsequent second dosing station 11 in which the articles 100 are filled with respective products. From the second dosing station 11, the moving means 5 moves the articles 100 at the weighing apparatus 2. The transferring means 6 picks up the articles 100 to be weighed from the moving means 5 and transfers and places them onto the weighing apparatus 2. At the end of the weighing operation, the transferring means 6 picks up the articles 100 weighed by the weighing apparatus 2 and transfers and gives them to the moving means 5 that moves the said articles to a subsequent exit station 12.

In a version of the filling machine that is not shown in the figures, two weighing apparatuses 2 are provided, which are arranged upstream and downstream, respectively, of the operative dosing stations 10, 11, with respect to a movement direction M of the articles into the filling machine 1, for weighing the articles that first are empty and subsequently are filled with product.

The moving means 5 comprises, for example, a transfer carousel provided with containment seats for the articles 100.

Furthermore, the filling machine 1 comprises a containment cabin 7 capable of defining a working volume W separated from an outer environment and containing the weighing apparatus 2, the transferring means 6 and the operative stations 9, 10, 11, 12 of the filling machine 1.

Air treatment and conditioning means, of a known type and not illustrated in the figures, is provided for introducing into the containment cabin 7 unidirectional and/or laminar flows F of filtered and aseptic conditioning air so as to maintain the working volume W, in which the filling and weighing processes occur, under a controlled atmosphere and to prevent, or greatly reduce, any contaminations of the product.

The weighing means includes at least one operative weighing unit 3 and a reference weighing unit 3' comprising respective weighing cells 25 contained and housed within the casing means 21, 22, respective supporting elements 15 suitable to receive the articles 100 to be weighed and coming out from the casing means 21, 22, and respective supporting pins 17 connecting the weighing cells 25 to the relative supporting elements 15. The first weighing unit 3 and the second reference weighing unit 3' are substantially the same. In particular, according to the invention it is provided that the machine comprises at least two identical weighing units, one of which can be selected as the operative weighing unit 3 for weighing the articles 100 and the other one can be selected as the reference weighing unit 3', not used for weighing the articles 100, but for detecting measurements disturbances and/or perturbations.

In the illustrated embodiment, the weighing apparatus 2 comprises a plurality of weighing units 3, 3', for example, fourteen, arranged mutually adjacent, aligned and spaced apart, two of which, for example the outermost and most mutually spaced apart ones, act and operate as the reference weighing units 3', while the remaining ones act and operate as the operative weighing units 3 to detect the weight of the articles 100.

In any case, it has to be noted that any one (or more) weighing units of the plurality of weighing units of the weighing apparatus 2 can be selected and serve as reference weighing unit 3'.

For this purpose, the transferring means 6 is arranged so as to transfer the articles 100 on the operative weighing units 3 so that said reference weighing units 3', which do not receive any articles 100, can detect only the measurement disturbances and/or perturbations due to forces and/or stresses acting on the supporting elements 15 and supporting pins 17 of said reference weighing units 3' and generated by vibrations and/or accelerations and/or air flows and/or turbulences inside the machine. More precisely, the vibrations and/or accelerations and/or oscillations are generated by the mechanisms and the moving parts of the filling machine, while the air flows, draughts, and turbulences are generated by the conditioning air flows and/or by pneumatic means which is implemented in the operative stations of the filling machine. In particular, the pneumatic means generates pressurized air jets that determine draughts and turbulences having a pulsated and/or intermittent nature.

The processing means 8 receives from the reference weighing units 3' the comparative data relating to the forces and/or the stresses detected so as to compensate the data relating to the measurements carried out by the operative weighing units 3, which weigh the articles 100. As better explained in the following description, by virtue of the data provided by the reference weighing units 3', the processing means 8 can detect and measure the extent of the disturbances and perturbations acting on all the operative weighing units 3 and appropriately correct the weight measurements of the articles 100 so as to obtain correct and precise values.

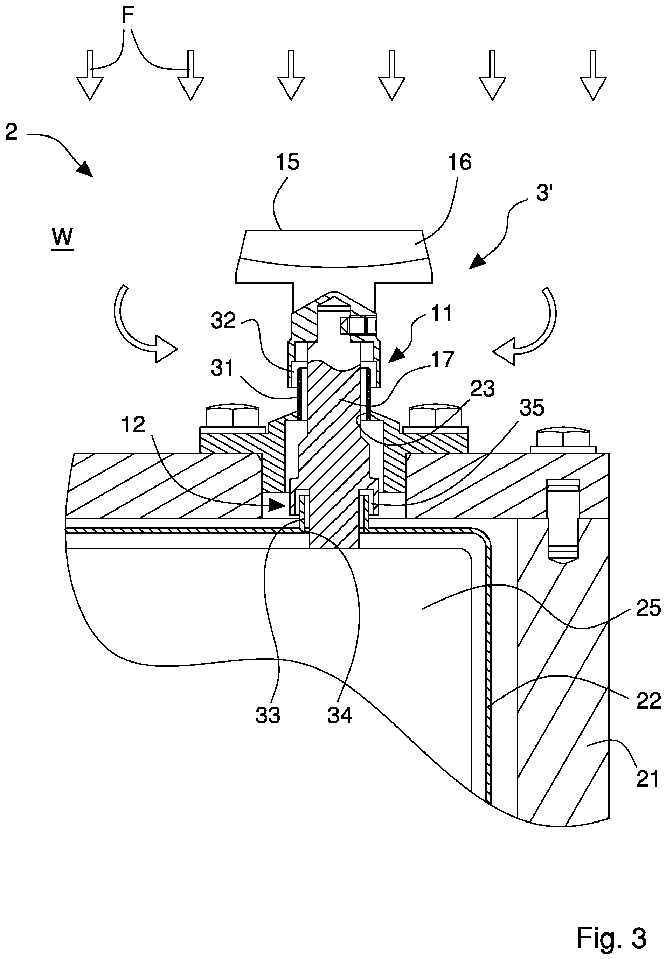

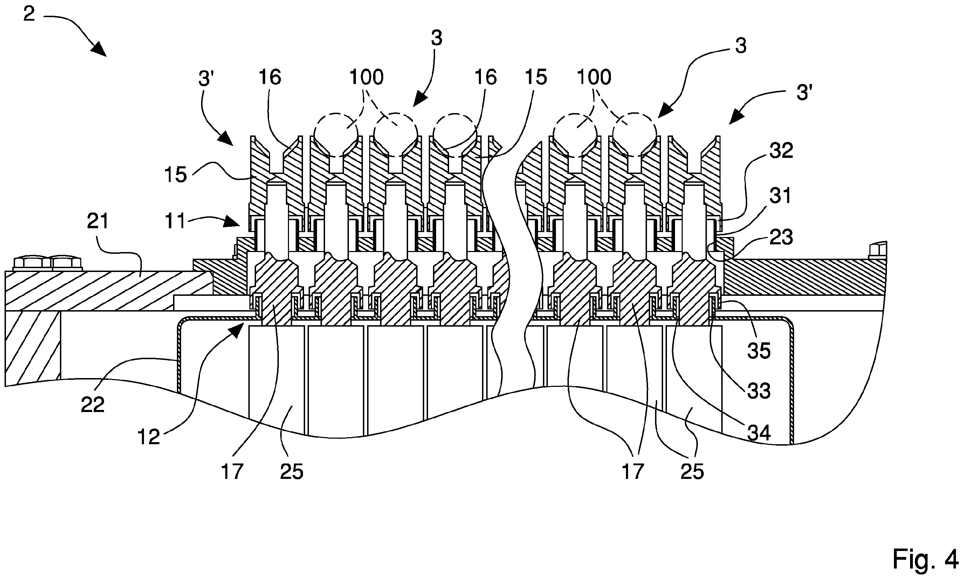

With particular reference to Figures 3 and 4, each of the operative 3 and reference 3' weighing units comprises barrier means 11, 12 interposed between the respective supporting elements 15 and/or supporting pins 17 and the casing means 21, 22, in order to prevent foreign elements, particles, contaminants, dirt from entering within said casing means. The barrier means 11, 12 is configured so as to avoid any contact or friction between the supporting elements 15 and supporting pins 17 and the casing means 21, 22, so as to ensure a proper weight measurement.

The casing means comprises a first outer casing 21 that encloses and contains, in addition to the weighing units 3, 3', the processing means 8 and the electrical power and control devices of the entire weighing apparatus 2, and a second inner casing 22 placed inside the first casing 21 and which contains the weighing cells 25 or load cells (measurement transducers) of the weighing units 3, 3'.

Each supporting element 15 is provided with a seat 16 suitable to receive a respective article 100 to be weighed.

The supporting pin 17 exits the first casing 21 through a respective first passage opening 23 and the second casing 22 through a respective second passage opening 34.

Barrier means comprises first barrier means 11 interposed between the supporting element 15 and supporting pin 17 and the first passage opening 23, and second barrier means 12 interposed between the supporting pin 17 and the second passage opening 34.

First barrier means 11 is of the so-called labyrinth type and comprises a first tubular duct 31 which extends from the first passage opening 23 toward the outside (toward the supporting element 15) and fits within a first cavity 32 made in a lower portion of the supporting element 15. The outer walls of the tubular duct 31 are spaced apart from the inner walls of the first cavity 32. The supporting pin 17 passes without any contact through the first tubular duct 31.

Second barrier means 12 is also of the labyrinth type and comprises a second tubular duct 33 which extends from the second passage opening 34 toward the outside (toward the supporting element 15) and fits within a second cavity 35 made in a center portion of the supporting pin 17. The outer walls of the second tubular duct 33 are spaced apart from the inner walls of the second cavity 35. The supporting pin 17 passes without any contact through the second tubular duct 31.

Barrier means 11, 12 forms with the supporting pin 17 a narrow and tortuous passage gap or interspace that, on one hand, allows the supporting pin 17 axially move freely, without any contact with said casings 21, 22 (this providing a correct and not altered measurement of the article 100 weight), on the other hand prevents and blocks foreign elements, particles, contaminants, general dirt from entering inside the casings 21, 22 that could affect the proper operation of the weighing cells 25.

Advantageously, in the embodiment illustrated in the Figures 3 and 4, the first barrier means 11 is formed integrally on the supporting element 15 and the second barrier means 12 is formed integrally on the supporting pin 17.

In more detail, the first barrier means 11 comprises a first annular profile that at least partially surrounds the first tubular duct 31, while the second barrier means 12 comprises a second annular profile which at least partially surrounds the second tubular duct 33 to achieve, respectively, a first upper stretch and a second lower stretch of the above-described passage interspace or gap.

Although barrier means 11, 12 allows the air passage of between the working volume W and the interior of the casings 21, 22, the narrow and tortuous passage interspace causes high pressure drop of the air flow entering the casings 21, 22. In this manner, the pressure and speed values of the air inside the casings 21, 22, and particularly inside the second casing 22, are considerably reduced compared to the values that are found on the outside, in the working volume W. Furthermore, shape and size of the supporting element 15 are such as to create a kind of shield or buffer that deflects the vertical air flow F away from the first opening 23.

It shall be noticed that, in any case, all the weighing cells 25 of the measurement apparatus 2 are subjected to the same (minimum) air pressure and/or speed variations inside the casings 21, 22, since the respective weighing units 3, 3' are provided with identical barrier means 11, 12. In this manner, the reference weighing units 3' detect exactly the same disturbances and perturbations (generated by the movements and/or by the air pressure) to which also the operative weighing units 3 are subjected.

The operation of the filling machine 1 of the invention and the corresponding weighing method which the machine executes provide, at an initial step, selecting one of the at least two weighing units 3 of the weighing apparatus 2 as the operative weighing unit 3 suitable to weigh the articles 100, and the remaining one of said at least two weighing units as the reference weighing unit 3', which does not receive articles 100, but is arranged to detect only measurement disturbances and/or perturbations due to forces and/or stresses acting on the corresponding supporting element 15 and supporting pin 17 and generated by vibrations and/or accelerations of mechanisms and/or moving parts of the machine and by air flows, draughts, turbulences generated by the laminar air flows F inside the working volume W, and/or by pneumatic means that is implemented in the operative stations of the filling machine.

In the illustrated embodiment, the weighing apparatus 2 comprises a plurality of weighing units, for example fourteen, and there is provided to select two of said weighing units as the reference weighing units 3' and the remaining (twelve) weighing units acting and operating as the operative weighing units 3 for weighing the articles 100.

In the operational step there is provided to transfer, by the transferring means 6, the articles 100 on the operative weighing units 3 to measure a weight of the articles 100.

It has to be noted that in the illustrated embodiment, the weighing units that act as the reference weighing units 3' are always the same, for example, the outermost weighing units, as shown in Figure 4. For this purpose, the transferring means 6 is configured so as to pick up from the moving means 5 a number of articles 100 (twelve) corresponding to the number of the operative weighing units 3 and position said articles on the operative weighing units, leaving the reference weighing unit 3' empty. Therefore, the transferring means 6 comprises gripping means capable of gripping twelve articles 100 arranged adjacent and aligned from the wheel of the moving means 5 and of releasing them onto the twelve innermost operative weighing units 3 of the weighing apparatus 2.

In a variant of the machine that is not illustrated in the figures, the transferring means 6 may be configured so as to release and pick up the articles 100 on the operative weighing units 3 selected by the processing means 8 of the weighing apparatus 2 by choosing, for example randomly, the weighing units acting as the reference weighing units 3'. In other words, the different weighing units act, for example in different manufacturing batches, both as the reference weighing unit 3' and as the operative weighing units 3.

The processing means 8 receives from the reference weighing unit 3' comparative data relating to the detected forces and/or stresses so as to adjust and/or calibrate the operative weighing units 3 that weigh the articles 100 by taking into account said measurement disturbances and/or perturbations. By detecting and measuring the disturbances and perturbations generated by vibrations, accelerations, oscillations, air flows, draughts, air turbulences, in fact, it is possible to "filter", i.e. to correct and calibrate in real time the measurements of the weights carried out on the articles 100 during the operation of the filling machine, so as to obtain precise and accurate values of the weights.

Since all the reference weighing units 3' and operative weighing units 3 are identical and provided with identical supporting elements 15, supporting pins 17 and barrier means 11, 12, they are subjected to the same disturbances and perturbations. In other words, the reference weighing units 3' detect exactly the same disturbances and perturbations which the operative weighing units 3 are subjected to.

Therefore, owing to the filling machine of the invention and the related method for weighing articles 100 it is possible to measure in a precise and repeatable manner the weight of articles 100, such as capsules, push-fit capsules or the like, or containers, such as vials, bottles or the like, by detecting and quantifying the disturbances and perturbations generated during the operation of the machine. In particular, it is possible to detect and evaluate in the weight measurement the disturbances and perturbations due both to vibrations and accelerations generated by mechanisms and moving parts of the machine, and to air flows and/or turbulences generated by air laminar flows and/or by pneumatic means of operative stations of the machine.

It has to be noted that the solution of the invention is particularly advantageous in the case of filling machines which are provided with containment cabins that are closed and isolated from the outer environment, in which the pulsated draughts and/or air turbulences generated by the pneumatic means of the operative stations cause major disturbances to the weighing units.

## Claims

1. Filling machine for filling articles (100) with at least one product comprising:
- a plurality of operative stations (9, 10, 11, 12) for executing operations on said articles (100) and comprising a feeding station (9) of said articles (100) and at least one dosing station (10, 11) for filling said articles (100) with said product;
- moving means (5) for moving said articles (100) from an operative station to a successive operative station;
- a weighing apparatus (2) comprising casing means (21, 22) and weighing means (3; 3'), said weighing means including at least one operative weighing unit (3) and at least one reference weighing unit (3') comprising respective weighing cells (25) that are contained and housed within said casing means (21, 22), respective supporting elements (15) suitable to receive articles (100) to be weighed and coming out from said casing means (21, 22) and respective supporting pins (17) connecting said weighing cells (25) to the relative supporting elements (15), said at least one operative weighing unit (3) being substantially equal to said at least one reference weighing unit (3');
- transferring means (6) for transferring said articles (100) to be weighed from said moving means (5) only to said at least one operative weighing unit (3) and vice versa;
- processing means (8) connected to said weighing means (3; 3') for receiving from said at least one operative weighing unit (3) data relating to the weight of said weighed articles (100) and from said at least one reference weighing unit (3') comparative data relating to measurement disturbances and/or perturbations due to forces and/or stresses acting on the respective supporting element (15) and/or supporting pin (17) and generated by vibrations and/or accelerations and/or air flows and/or air turbulences occurring within said filling machine (1) so as to compensate said data relating to the weight of said articles (100) on the basis of said data relating to said detected measurement disturbances and/or perturbations.

2. Machine according to claim 1, comprising a containment cabin (7) defining a working volume (W) separated by an outer environment and containing said weighing apparatus (2), said transferring means (6) and said operative stations (9, 10, 11, 12) of said filling machine (1).

3. Machine according to claim 1 or 2, wherein said weighing apparatus (2) comprises a plurality of operative weighing units (3) arranged mutually adjacent and spaced apart and at least two reference weighing unit (3').

4. Machine according to any preceding claim, wherein said casing means comprises a first casing (21) enclosing a second casing (22), the latter containing said weighing cells (25) of said weighing units (3; 3'), said first casing (21) and said second casing (22) being provided with first passage openings (23) and second passage openings (34), respectively, for the passage of said supporting pins (17) of said weighing units (3; 3').

5. Machine according to any preceding claim, wherein each supporting element (15) is provided with a seat (16) suitable for receiving a respective article (100) to be weighed.

6. Machine according to any preceding claim, wherein each weighing units (3; 3') comprises barrier means (11, 12) interposed between the respective supporting elements (15) and/or supporting pins (17) and said casing means (21, 22) and arranged to prevent foreign elements, particles, contaminants and dirt from entering said casing means (21, 22) without interacting with, or contacting, said supporting elements (15) and/or supporting pins (17).

7. Machine according to claim 6, as appended to claim 4, wherein said barrier means comprises first barrier means (11) interposed between said supporting elements (15) and supporting pins (17) and said first passage opening (23) of said first casing (21), and second barrier means (12) interposed between said supporting pins (17) and said second opening (34) of said second casing (22).

8. Machine according to claim 7, wherein said first barrier means (11) and said second barrier means (12) comprise respective labyrinth means.

9. Machine according to any preceding claim, wherein said weighing apparatus (2) is arranged downstream of said dosing station (10, 11).

10. Method for weighing articles (100) in a filling machine (1) provided with a weighing apparatus (2) comprising casing means (21, 22) and weighing means (3; 3'), the latter including at least two weighing units (3; 3') comprising respective weighing cells (25) that are contained and housed within said casing means (21, 22), respective supporting elements (15) suitable to receive articles (100) to be weighed and coming out from said casing means (21, 22) and respective supporting pins (17) connecting said weighing cells (25) to the relative supporting elements (15), said method comprising:
- selecting one of said at least two weighing units (3, 3') as operative weighing unit (3) for weighing said articles (100) and selecting the remaining one of said at least two weighing units as reference weighing unit (3') to detect only measurement disturbances and/or perturbations due to forces and/or stresses acting on the corresponding supporting element (15) and/or supporting pin (17) and generated by vibrations and/or accelerations and/or air flows and/or air turbulences occurring within said filling machine (1);
- sending data relating to said measurement disturbances and/or perturbations to a processing unit (8) connected to said weighing units (3; 3');
- transferring said articles (100) on said operative weighing unit (3) to measure a weight of said articles (100);
- sending data relating to the weight of said articles (100) to said processing unit (8);
- compensating said data relating to the weight of said articles (100) on the basis of said data relating to said measurement disturbances and/or perturbations in the processing unit (8).

11. Method according to claim 10, wherein said weighing apparatus (2) comprises a plurality of weighing units (3, 3') and wherein there is provided to select at least two of said plurality of weighing units (3, 3') as reference weighing units (3').

12. Method according to claim 10 or 11, comprising positioning barrier means (11, 12) at said supporting elements (15) and supporting pins (17) to prevent that foreign elements, particles, contaminants and dirt pass from an environment (W), wherein said weighing apparatus (2) is positioned, into said casing means (21, 22), wherein said weighing units (3, 3') are positioned.

## Patentansprüche

1. Füllmaschine zum Füllen von Gegenständen (100) mit mindestens einem Produkt, die umfasst:
- eine Vielzahl von Betriebsstationen (9, 10, 11, 12) zum Ausführen von Operationen an den Gegenständen (100) und mit einer Zuführungsstation (9) der Gegenstände (100) und mindestens einer Dosierstation (10, 11) zum Füllen der Gegenstände (100) mit dem Produkt;
- eine Bewegungseinrichtung (5) zum Bewegen der Gegenstände (100) von einer Betriebsstation zu einer nachfolgenden Betriebsstation;
- eine Wiegevorrichtung (2) mit einer Gehäuseeinrichtung (21, 22) und einer Wiegeeinrichtung (3; 3'), wobei die Wiegeeinrichtung mindestens eine Betriebswiegeeinheit (3) und mindestens eine Referenzwiegeeinheit (3') mit jeweiligen Wiegezellen (25) umfasst, die innerhalb der Gehäuseeinrichtung (21, 22) enthalten und aufgenommen sind, jeweiligen Stützelementen (15), die zum Aufnehmen von zu wiegenden Gegenständen (100) geeignet sind und aus der Gehäuseeinrichtung (21, 22) herauskommen, und jeweiligen Stützstiften (17), die die Wiegezellen (25) mit den relativen Stützelementen (15) verbinden, wobei die mindestens eine Betriebswiegeeinheit (3) zu der mindestens einen Referenzwiegeeinheit (3') im Wesentlichen gleich ist;
- eine Überführungseinrichtung (6) zum Überführen der zu wiegenden Gegenstände (100) von der Bewegungseinrichtung (5) nur zu der mindestens einen Betriebswiegeeinheit (3) und umgekehrt;
- eine Verarbeitungseinrichtung (8), die mit der Wiegeeinrichtung (3; 3') verbunden ist, zum Empfangen von Daten in Bezug auf das Gewicht der gewogenen Gegenstände (100) der mindestens einen Betriebswiegeeinheit (3) und von Vergleichsdaten in Bezug auf Messbeeinträchtigungen und/oder Störungen aufgrund von Kräften und/oder Belastungen, die auf das jeweilige Stützelement (15) und/oder den jeweiligen Stützstift (17) wirken und durch Vibrationen und/oder Beschleunigungen und/oder Luftströmungen und/oder Luftturbulenzen erzeugt werden, die innerhalb der Füllmaschine (1) auftreten, von der mindestens einen Referenzwiegeeinheit (3'), um die Daten in Bezug auf das Gewicht der Gegenstände (100) auf der Basis der Daten in Bezug auf die detektierten Messbeeinträchtigungen und/oder Störungen zu kompensieren.

2. Maschine nach Anspruch 1 mit einer Einschlusskabine (7), die ein Arbeitsvolumen (W) definiert, das von einer äußeren Umgebung getrennt ist und die Wiegevorrichtung (2), die Überführungseinrichtung (6) und die Betriebsstationen (9, 10, 11, 12) der Füllmaschine (1) enthält.

3. Maschine nach Anspruch 1 oder 2, wobei die Wiegevorrichtung (2) eine Vielzahl von Betriebswiegeeinheiten (3), die zueinander benachbart und voneinander beabstandet angeordnet sind, und mindestens zwei Referenzwiegeeinheiten (3') umfasst.

4. Maschine nach einem vorangehenden Anspruch, wobei die Gehäuseeinrichtung ein erstes Gehäuse (21), das ein zweites Gehäuse (22) umschließt, umfasst, wobei das letztere die Wiegezellen (25) der Wiegeeinheiten (3; 3') enthält, wobei das erste Gehäuse (21) und das zweite Gehäuse (22) mit ersten Durchgangsöffnungen (23) bzw. zweiten Durchgangsöffnungen (34) für den Durchgang der Stützstifte (17) der Wiegeeinheiten (3; 3') versehen sind.

5. Maschine nach einem vorangehenden Anspruch, wobei jedes Stützelement (15) mit einem Sitz (16) versehen ist, der zum Aufnehmen eines jeweiligen zu wiegenden Gegenstandes (100) geeignet ist.

6. Maschine nach einem vorangehenden Anspruch, wobei alle Wiegeeinheiten (3; 3') eine Schrankeneinrichtung (11, 12) umfassen, die zwischen die jeweiligen Stützelemente (15) und/oder Stützstifte (17) und die Gehäuseeinrichtung (21, 22) eingefügt ist und angeordnet ist, um zu verhindern, dass Fremdelemente, Partikel, Verunreinigungen und Schmutz in die Gehäuseeinrichtung (21, 22) eintreten, ohne mit den Stützelementen (15) und/oder Stützstiften (17) in Wechselwirkung zu treten oder diese zu kontaktieren.

7. Maschine nach Anspruch 6, wie an Anspruch 4 angehängt, wobei die Schrankeneinrichtung eine erste Schrankeneinrichtung (11), die zwischen die Stützelemente (15) und die Stützstifte (17) und die erste Durchgangsöffnung (23) des ersten Gehäuses (21) eingefügt ist, und eine zweite Schrankeneinrichtung (12), die zwischen die Stützstifte (17) und die zweite Öffnung (34) des zweiten Gehäuses (22) eingefügt ist, umfasst.

8. Maschine nach Anspruch 7, wobei die erste Schrankeneinrichtung (11) und die zweite Schrankeneinrichtung (12) jeweilige Labyrintheinrichtungen umfassen.

9. Maschine nach einem vorangehenden Anspruch, wobei die Wiegevorrichtung (2) stromabwärts von der Dosierstation (10, 11) angeordnet ist.

10. Verfahren zum Wiegen von Gegenständen (100) in einer Füllmaschine (1), die mit einer Wiegevorrichtung (2) mit einer Gehäuseeinrichtung (21, 22) und einer Wiegeeinrichtung (3; 3'), wobei die letztere mindestens zwei Wiegeeinheiten (3; 3') mit jeweiligen Wiegezellen (25) umfasst, die innerhalb der Gehäuseeinrichtung (21, 22) enthalten und aufgenommen sind, jeweiligen Stützelementen (15), die geeignet sind, um zu wiegende Gegenstände (100) aufzunehmen und aus der Gehäuseeinrichtung (21, 22) herauskommen, und jeweiligen Stützstiften (17), die die Wiegezellen (25) mit den relativen Stützelementen (15) verbinden, versehen ist, wobei das Verfahren umfasst:
- Auswählen von einer der mindestens zwei Wiegeeinheiten (3, 3') als Betriebswiegeeinheit (3) zum Wiegen der Gegenstände (100) und Auswählen der restlichen der mindestens zwei Wiegeeinheiten als Referenzwiegeeinheit (3'), um nur Messbeeinträchtigungen und/oder Störungen aufgrund von Kräften und/oder Belastungen zu detektieren, die auf das entsprechende Stützelement (15) und/oder den entsprechenden Stützstift (17) wirken und durch Vibrationen und/oder Beschleunigungen und/oder Luftströmungen und/oder Luftturbulenzen erzeugt werden, die innerhalb der Füllmaschine (1) auftreten;
- Senden von Daten in Bezug auf die Messbeeinträchtigungen und/oder Störungen zu einer Verarbeitungseinheit (8), die mit den Wiegeeinheiten (3; 3') verbunden ist;
- Überführen der Gegenstände (100) auf die Betriebswiegeeinheit (3), um ein Gewicht der Gegenstände (100) zu messen;
- Senden von Daten in Bezug auf das Gewicht der Gegenstände (100) zur Verarbeitungseinheit (8);
- Kompensieren der Daten in Bezug auf das Gewicht der Gegenstände (100) auf der Basis der Daten in Bezug auf die Messbeeinträchtigungen und/oder Störungen in der Verarbeitungseinheit (8).

11. Verfahren nach Anspruch 10, wobei die Wiegevorrichtung (2) eine Vielzahl von Wiegeeinheiten (3, 3') umfasst und wobei vorgesehen ist, mindestens zwei der Vielzahl von Wiegeeinheiten (3, 3') als Referenzwiegeeinheiten (3') auszuwählen.

12. Verfahren nach Anspruch 10 oder 11, das das Positionieren einer Schrankeneinrichtung (11, 12) an den Stützelementen (15) und Stützstiften (17) umfasst, um zu verhindern, dass Fremdelemente, Partikel, Verunreinigungen und Schmutz von einer Umgebung (W), in der die Wiegevorrichtung (2) positioniert ist, in die Gehäuseeinrichtung (21, 22), in der die Wiegeeinheiten (3, 3') positioniert sind, hindurchtreten.

## Revendications

1. Machine de remplissage pour remplir des articles (100) avec au moins un produit comprenant :
- une pluralité de stations opérationnelles (9, 10, 11, 12) pour exécuter des opérations sur lesdits articles (100) et comprenant une station d'alimentation (9) desdits articles (100) et au moins une station de dosage (10, 11) pour remplir lesdits articles (100) avec ledit produit ;
- un moyen de déplacement (5) pour déplacer lesdits articles (100) d'une station opérationnelle à une station opérationnelle successive ;
- un appareil de pesée (2) comprenant des moyens de carter (21, 22) et des moyens de pesée (3 ; 3'), lesdits moyens de pesée comportant au moins une unité de pesée opérationnelle (3) et au moins une unité de pesée de référence (3') comprenant des cellules de pesée (25) respectives qui sont contenues et logées au sein desdits moyens de carter (21, 22), des éléments de support (15) respectifs appropriés pour recevoir des articles (100) à peser et sortant desdits moyens de carter (21, 22) et des broches de support (17) respectives raccordant lesdites cellules de pesée (25) aux éléments de support (15) relatifs, ladite au moins une unité de pesée opérationnelle (3) étant sensiblement égale à ladite au moins une unité de pesée de référence (3') ;
- un moyen de transfert (6) pour transférer lesdits articles (100) à peser depuis ledit moyen de déplacement (5) uniquement jusqu'à ladite au moins une unité de pesée opérationnelle (3) et vice versa ;
- un moyen de traitement (8) raccordé auxdits moyens de pesée (3 ; 3') pour recevoir en provenance de ladite au moins une unité de pesée opérationnelle (3) des données concernant le poids desdits articles (100) pesés et en provenance de ladite au moins une unité de pesée de référence (3') des données comparatives concernant des troubles et/ou des perturbations de mesure dus à des forces et/ou des contraintes agissant sur l'élément de support (15) respectif et/ou la broche de support (17) respective et générés par des vibrations et/ou des accélérations et/ou des flux d'air et/ou des turbulences d'air se produisant au sein de ladite machine de remplissage (1) de façon à compenser lesdites données concernant le poids desdits articles (100) sur la base desdites données concernant lesdits troubles et/ou perturbations de mesure détectés.

2. Machine selon la revendication 1, comprenant une cabine de confinement (7) définissant un volume de travail (W) séparé par un environnement extérieur et contenant ledit appareil de pesée (2), ledit moyen de transfert (6) et lesdites stations opérationnelles (9, 10, 11, 12) de ladite machine de remplissage (1).

3. Machine selon la revendication 1 ou 2, dans laquelle ledit appareil de pesée (2) comprend une pluralité d'unités de pesée opérationnelles (3) agencées mutuellement adjacentes et espacées et au moins deux unités de pesée de référence (3').

4. Machine selon une quelconque revendication précédente, dans laquelle lesdits moyens de carter comprennent un premier carter (21) renfermant un second carter (22), ce dernier contenant lesdites cellules de pesée (25) desdites unités de pesée (3 ; 3'), ledit premier carter (21) et ledit second carter (22) étant pourvus de premières ouvertures de passage (23) et de secondes ouvertures de passage (34), respectivement, pour le passage desdites broches de support (17) desdites unités de pesée (3 ; 3').

5. Machine selon une quelconque revendication précédente, dans laquelle chaque élément de support (15) est pourvu d'un siège (16) approprié pour recevoir un article (100) respectif à peser.

6. Machine selon une quelconque revendication précédente, dans laquelle chaque unité de pesée (3 ; 3') comprend des moyens de barrière (11, 12) intercalés entre les éléments de support (15) respectifs et/ou les broches de support (17) respectives et lesdits moyens de carter (21, 22) et agencés pour empêcher des éléments étrangers, des particules, des contaminants et des saletés d'entrer dans lesdits moyens de carter (21, 22) sans interagir ou venir en contact avec lesdits éléments de support (15) et/ou lesdites broches de support (17).

7. Machine selon la revendication 6, lorsqu'elle dépend de la revendication 4, dans laquelle lesdits moyens de barrière comprennent un premier moyen de barrière (11) intercalé entre lesdits éléments de support (15) et lesdites broches de support (17) et ladite première ouverture de passage (23) dudit premier carter (21), et un second moyen de barrière (12) intercalé entre lesdites broches de support (17) et ladite seconde ouverture (34) dudit second carter (22).

8. Machine selon la revendication 7, dans laquelle ledit premier moyen de barrière (11) et ledit second moyen de barrière (12) comprennent des moyens de labyrinthe respectifs.

9. Machine selon une quelconque revendication précédente, dans laquelle ledit appareil de pesée (2) est agencé en aval de ladite station de dosage (10, 11).

10. Procédé de pesée d'articles (100) dans une machine de remplissage (1) pourvue d'un appareil de pesée (2) comprenant des moyens de carter (21, 22) et des moyens de pesée (3 ; 3'), ces derniers comportant au moins deux unités de pesée (3 ; 3') comprenant des cellules de pesée (25) respectives qui sont contenues et logées au sein desdits moyens de carter (21, 22), des éléments de support (15) respectifs appropriés pour recevoir des articles (100) à peser et sortant desdits moyens de carter (21, 22) et des broches de support (17) respectives raccordant lesdites cellules de pesée (25) aux éléments de support (15) relatifs, ledit procédé comprenant :
- la sélection de l'une desdites au moins deux unités de pesée (3 ; 3') en tant qu'unité de pesée opérationnelle (3) pour peser lesdits articles (100) et la sélection de l'unité restante desdites au moins deux unités de pesée en tant qu'unité de pesée de référence (3') pour détecter uniquement des troubles et/ou des perturbations de mesure dus à des forces et/ou des contraintes agissant sur l'élément de support (15) et/ou la broche de support (17) correspondant(e) et générés par des vibrations et/ou des accélérations et/ou des flux d'air et/ou des turbulences d'air se produisant au sein de ladite machine de remplissage (1) ;
- l'envoi des données concernant lesdits troubles et/ou perturbations de mesure à une unité de traitement (8) raccordée auxdites unités de pesée (3 ; 3') ;
- le transfert desdits articles (100) sur ladite unité de pesée opérationnelle (3) pour mesurer un poids desdits articles (100) ;
- l'envoi des données concernant le poids desdits articles (100) à ladite unité de traitement (8) ;
- la compensation desdites données concernant le poids desdits articles (100) sur la base desdites données concernant lesdits troubles et/ou perturbations de mesure dans l'unité de traitement (8).

11. Procédé selon la revendication 10, dans lequel ledit appareil de pesée (2) comprend une pluralité d'unités de pesée (3 ; 3') et dans lequel il est prévu de sélectionner au moins deux de ladite pluralité d'unités de pesée (3 ; 3') en tant qu'unités de pesée de référence (3').

12. Procédé selon la revendication 10 ou 11, comprenant le positionnement de moyens de barrière (11, 12) au niveau desdits éléments de support (15) et desdites broches de support (17) pour empêcher que des éléments étrangers, des particules, des contaminants et des saletés passent depuis un environnement (W), dans lequel ledit appareil de pesée (2) est positionné, dans lesdits moyens de carter (21, 22), dans lequel lesdites unités de pesée (3 ; 3') sont positionnées.
